# EUROPEAN PATENT APPLICATION

(11) **EP 4 123 845 A1**
(43) Date of publication of application: **25.01.2023**
(21) Application number: 22195033.0
(22) Date of filing: 07.12.2018
(51) Int. Cl.: H01R 31/06, H01R 27/02, G06F 1/16, G06F 1/18

(54) **ADAPTER HAVING STORAGE FUNCTION**

(62) Divisional of application: 18925717.3
(71) Applicant: Guangdong Gopod Group Co., Ltd., Shenzhen, Guangdong 518108 (CN)
(72) Inventor: LIAO, Zhuowen, Shenzhen, Guangdong, 518108 (CN)
(74) Representative: Ipside

(57) **Abstract**

The present invention is applicable to the technical field of electronic devices, and provides an adapter having a storage function. The adapter comprises a base, an upper cover, a control panel, a memory, an adapter head, and several adapter interfaces, with the base being provided with an aperture, and the aperture being internally provided with a clamping plate. In the present invention, the memory is disposed in the base, the memory is electrically connected to the control panel, and after the adapter head is connected to an external electronic device, the memory can effectively store data and can serve as a storage medium such as a USB flash disk or a mobile hard disk, and therefore the adapter has not only the function of signal transfer but also a certain storage function, so that the adapter has diversified functions and strong wide adaptability; and the clamping plate is disposed on the base at a position corresponding to the memory, and the clamping plate can be detachably connected to the base, thus facilitating the assembly and disassembly and the maintenance of the memory by disassembling the clamping plate.

## Description

### Technical Field

The present invention relates to the technical field of electronic devices, and particularly relates to an adapter having a storage function.

### Background of the Invention

An adapter is an interface conversion device, which can be an independent hardware interface device, allowing hardware or an electronic interface to be connected to other hardware or electronic interfaces to realize signal transfer between electronic devices.

The main function of an existing adapter is to provide various types of interfaces to achieve signal transmission between different electronic devices. However, this design has the following disadvantages: the adapter only has the function of signal transmission, and if data storage is required, the adapter needs to carry an independent storage medium for copying, such as a USB flash disk or a mobile hard disk. This results in adapter's single function and poor adaptability.

### Summary of the Invention

An object of the present invention is to provide an adapter having a storage function to solve the problems in the prior art that the adapter has a single function and poor wide adaptability.

In order to achieve the above object, the present invention adopts the following technical solution: provided is an adapter having a storage function, the adapter comprising a base, an upper cover disposed on the base and used for covering the base, a control panel disposed in the base, a memory electrically connected to the control panel, an adapter head electrically connected to the control panel, and several adapter interfaces respectively electrically connected to the control panel, wherein the memory is disposed in the base, an aperture is disposed on the base at a position corresponding to the memory, and the aperture is internally provided with a clamping plate detachably connected to the base.

Furthermore, a light hole is disposed on the base, an indicator light is disposed in the light hole, and the indicator light is electrically connected to the control panel.

Furthermore, the base is square; the base has several first rounded corners; and the upper cover is provided with several second rounded corners cooperating with the corresponding first rounded corners.

Furthermore, the base is provided with a clamping slot used for accommodating the adapter head.

Furthermore, the adapter interface comprises a first port electrically connected to the control panel; and the base is correspondingly provided with a first terminal hole used for supporting the first port.

Furthermore, the adapter interface further comprises a second port electrically connected to the control panel; and the base is correspondingly provided with a second terminal hole used for supporting the second port.

Furthermore, the adapter interface further comprises a third port electrically connected to the control panel; and the base is correspondingly provided with a third terminal hole used for supporting the third port.

Furthermore, the adapter interface further comprises a fourth port electrically connected to the control panel; and the base is correspondingly provided with a fourth terminal hole used for supporting the fourth port.

Furthermore, the adapter interface further comprises a fifth port electrically connected to the control panel; and the base is correspondingly provided with a fifth terminal hole used for supporting the fifth port.

Furthermore, the adapter interface further comprises a sixth port electrically connected to the control panel; and the base is correspondingly provided with a sixth terminal hole used for supporting the sixth port.

The adapter having the storage function provided by the present invention has the following beneficial effects: compared with the prior art, and in the present invention, the memory is disposed in the base, the memory is electrically connected to the control panel, and after the adapter head is connected to an external electronic device, the memory can effectively store data and can serve as a storage medium such as a USB flash disk or a mobile hard disk, and therefore the adapter has not only the function of signal transfer but also a certain storage function, so that the adapter has diversified functions and strong wide adaptability; and the clamping plate is disposed on the base at a position corresponding to the memory, and the clamping plate can be detachably connected to the base, thus facilitating the assembly and disassembly and the maintenance of the memory by disassembling the clamping plate.

### Brief description of the Drawings

In order to illustrate the technical solutions in the embodiments of the present invention more clearly, a brief introduction to the figures to be used in the description of the embodiments or the prior art will be provided below. Obviously, the drawings in the following description show merely some embodiments of the present invention, and those of ordinary skill in the art would have derived other drawings from these drawings without involving any inventive effort.
Fig. 1 is a schematic structural diagram of an adapter having a storage function provided by an embodiment of the present invention when unfolded;
Fig. 2 is a front view of the adapter having the storage function provided by the embodiment of the present invention when folded;
Fig. 3 is a first side view of the adapter having the storage function provided by the embodiment of the present invention when folded;
Fig. 4 is a second side view of the adapter having the storage function provided by the embodiment of the present invention when folded;
Fig. 5 is a rear view of the adapter having the storage function provided by the embodiment of the present invention when folded; and
Fig. 6 is a partial schematic structural diagram of the adapter having the storage function provided by the embodiment of the present invention.

Reference signs in the drawings are as follows:
1. Base; 10. Mounting hole; 11. Anti-slip rubber pad; 12. Clamping plate; 13. Clamping slot; 14. First rounded corner;
2. Upper cover; 21. Recess; 210. Threaded hole; 22. Second rounded corner;
31. First port; 32. Second port; 33. Third port; 34. Fourth port; 35. Fifth port; 36. Sixth port; 37. Indicator light;
4. Adapter head; 5. Conductor; 6. Screw.

### Detailed Description of Embodiments

In order to make the technical problems to be solved, technical solutions and beneficial effects of the present invention clearer, the present invention is further illustrated in detail below in conjunction with the accompanying drawings and embodiments. It should be understood that the specific embodiments described herein are merely used to explain the present invention, but not intended to limit the present invention.

It should be noted that when an element is referred to as being "fixed to" or "arranged at" a further element, it can be directly located on the further element or indirectly located on the further element. When an element is referred to as being "connected to" a further element, it can be directly connected to the further element or indirectly connected to the further element.

In addition, the terms "first", "second", "third", "fourth", "fifth" and "sixth" are for descriptive purposes only and should not be construed as indicating or implying relative importance or implicitly indicating the number of technical features indicated. Thus, the features defined with "first", "second", "third", "fourth", "fifth" and "sixth" can explicitly or implicitly include one or more of the features. In the description of the present invention, the word "multiple" means two or more, unless otherwise explicitly and specifically defined.

In the description of the present invention, it should be understood that orientations or positional relationships indicated by the terms "center", "length", "width", "thickness", "upper", "lower", "front"; "rear", "left", "right", "vertical", "horizontal", "top", "bottom", "inner", "outer" etc. are based on the orientation or positional relationship shown in the accompanying drawings and are only for facilitating the description of the present invention and simplifying the description, rather than indicating or implying that the device or element referred to must have a particular orientation or be constructed and operated in a particular orientation, and therefore will not be interpreted as limiting the present invention.

In the description of the present invention, it should be noted that unless otherwise explicitly specified and defined, terms "mounting", "connecting" and "connection" should be understood in a broad sense, for example, they can be a fixed connection, a detachable connection, or an integrated connection; can be a mechanical connection and can also be an electric connection; and can be a direct connection and can also be an indirect connection through an intermediate medium, and can be communication between interiors of two elements or interaction between two elements. For those of ordinary skill in the art, the specific meaning of the terms mentioned above in the present invention can be understood according to specific circumstances.

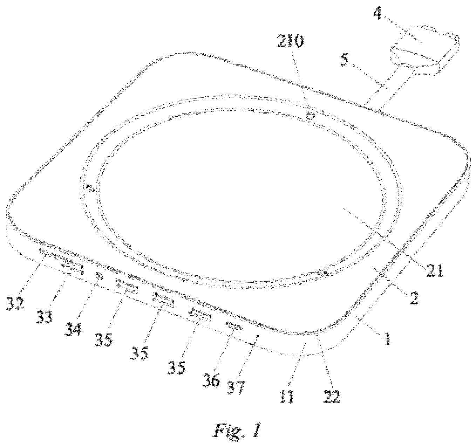

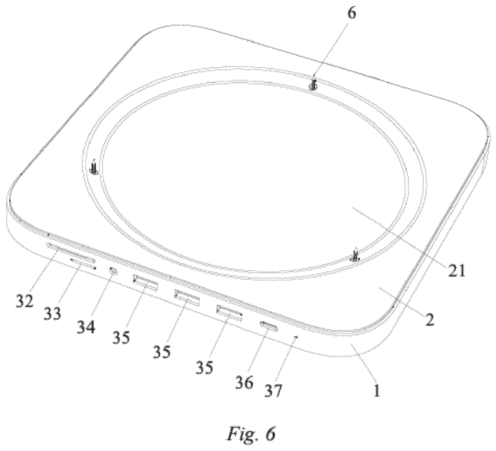

Referring to Fig. 1 to Fig. 6, an adapter having a storage function provided by an embodiment of the present invention is now illustrated. The adapter comprises a base 1, and an upper cover 2 disposed on the base 1 and used for covering the base 1, an accommodating chamber being formed between the base 1 and the upper cover 2; and the adapter further comprises a control panel (not shown in the figures) disposed in the accommodating chamber, an adapter head 4 electrically connected to the control panel, and several adapter interfaces respectively electrically connected to the control panel.

The adapter further comprises a memory (not shown in the figures) disposed in the base 1, the memory being electrically connected to the control panel. Specifically, the memory can be a Solid State Disk (short for SSD), and the memory is plugged onto the control panel. An aperture (not illustrated in the figures) is disposed on the base 1 at a position corresponding to the memory, the aperture being internally provided with a clamping plate 12 detachably connected to the base 1.

A recess 21 used for supporting an electronic device is disposed on the upper cover 2 protruding towards a bottom face of the base 1. Preferably, the recess 21 is in the shape of a bowl or a cup, which is not uniquely limited herein.

As Apple's latest Mac Mini is popular in the world, an adapter suitable for the Mac Mini electronic product is born therewith. The adapter is designed to be small in physical dimension, and cannot effectively support the Mac Mini when externally connected to the Mac Mini, and therefore the Mac Mini is generally placed on a flat surface, however, liquid on the flat surface will flow into the Mac Mini by accident, causing severe damage to the Mac Mini; in addition, with a round protrusion at the bottom of the Mac Mini, the Mac Mini has poor stability when placed on a horizontal surface. According to the structure, the recess 21 is disposed on the upper cover 2, and the recess 21 can effectively support an electronic device, especially for a Mac Mini; and a round protrusion is disposed at the bottom of the Mac Mini, while the recess 21 is provided to be in the shape of a bowl or a cup which can well fit with the round protrusion, thus stably supporting the Mac Mini.

Optionally, several threaded holes 210 are disposed at equal intervals on a side wall of the recess 21; mounting holes 10 are disposed on the base 1 at positions corresponding to the threaded holes 210; the adapter further comprises several screws 6 used for mounting the upper cover 2 onto the base 1; and each screw 6 passes through the corresponding mounting hole 10 and is in threaded connection with the corresponding threaded hole 210. According to the structure, the upper cover 2 is connected and fixed to the base 1 via the screws 6, thus facilitating rapid assembly and disassembly of the upper cover 2 and the base 1 and facilitating the maintenance of the adapter. Moreover, screw 6 holes can be correspondingly provided on the round protrusion of the Mac Mini, the screw 6 can pass through the corresponding mounting hole 10 and the corresponding threaded hole 210 and then be fixed into the corresponding screw 6 hole in a screw 6 fit manner, thus effectively fixing the Mac Mini. The Mac Mini and the adapter can be integrated into one, thus being convenient to carry.

Optionally, several retainers are disposed at the periphery of the upper cover 2, clamping parts respectively cooperating with the retainers for clamping are provided on the base 1, and therefore, the upper cover 2 can be clamped in the base 1. In other embodiments, the upper cover 2 can also be connected to the base 1 in other manners, such as bonding or welding, which is not uniquely limited herein.

Several anti-slip rubber pads 11 are disposed at even intervals on a lateral side of the base 1 that is away from the upper cover 2. According to the structure, several anti-slip rubber pads 11 play an anti-slip role on the one hand, and on the other hand, the base 1 and a flat surface can be spaced apart to prevent liquid on the flat surface from flowing into the adapter or the electronic device, thus improving safety and reliability of the adapter or the electronic device.

The adapter further comprises a conductor 5 used for electrically connecting the control panel and the adapter head 4; the base 1 is provided with a through hole (not illustrated in the figures) used for the conductor 5 to pass through; and one end of the conductor 5 extends into the base 1 and is connected to the control panel, and the other end of the conductor 5 passes through the through hole and is connected to the adapter head 4. Specifically, the conductor 5 can be chosen as a conducting wire, which is not uniquely limited herein. According to the structure, the adapter head 4 is electrically connected to an external electronic device via the conductor 5, and due to the fact that the conductor 5 has a certain bending performance, the adapter head 4 can be connected to interfaces at different positions of the electronic device; and there is no need to adjust the interface of the electronic device to correspond to the adapter head 4, thus improving rapidity of connection between the adapter head 4 and the electronic device. In other embodiments, the adapter head 4 can also be electrically connected to the control panel in other manners, which is not uniquely limited herein.

Optionally, the conductor 5 and the adapter head 4 are in detachable connection with each other, such as a clamping connection or a magnetic connection, which is not uniquely limited herein.

Preferably, the adapter head 4 is formed by combining two Type-C connectors. In other embodiments, the type of the adapter head 4 can also be adjusted according to practical requirements, for example a USB adapter head, an Apple adapter head, a Micro-USB adapter head etc.; and the adapter head 4 can be of various types fitting with the electronic device to be connected to different kinds of interfaces, thus improving use extensiveness of the adapter, which is not uniquely limited herein.

According to the adapter having the storage function provided by the present invention, compared with the prior art, and in the present invention, the memory is disposed in the base 1, the memory is electrically connected to the control panel, and after the adapter head 4 is connected to the external electronic device, the memory can effectively store data and can serve as a storage medium such as a USB flash disk or a mobile hard disk, and therefore the adapter has not only the function of signal transfer but also a certain storage function, so that the adapter has diversified functions and strong wide adaptability; and the clamping plate 12 is disposed on the base 1 at a position corresponding to the memory, and the clamping plate 12 can be detachably connected to the base 1, thus facilitating the assembly and disassembly and the maintenance of the memory by disassembling the clamping plate 12.

Furthermore, referring to Fig. 1, in a specific embodiment of the adapter provided by the embodiment of the present invention, a light hole (not illustrated in the figures) is disposed on the base 1, an indicator light 37 is disposed in the light hole, and the indicator light 37 is electrically connected to the control panel. According to the structure, the indicator light 37 is used for showing a working state of the adapter. When the indicator light 37 is on, the adapter is working normally; and when the indicator light 37 is off, the adapter is not working.

Furthermore, referring to Fig. 1, in a specific embodiment of the adapter provided by the embodiment of the present invention, the base 1 is square; the base 1 is provided with several first rounded corners 14; and the upper cover 2 is provided with several second rounded corners 22 cooperating with the corresponding first rounded corners 14. Specifically, the base 1 is of a square structure; the base 1 has four first rounded corners 14; an upper end of the base 1 is an opening; the upper cover 2 can cooperate with the base 1 to cover the opening; and the upper cover 2 is provided with second rounded corners 22 fitting with the corresponding first rounded corners 14. According to the structure, configuration of the adapter fits with an electronic device, and particularly fits with the dimension of a Mac Mini. After the adapter supports the Mac Mini, elegant appearance is achieved. The adapter is designed to be provided with the rounded corners, thus preventing a user from being hurt by sharp right angles, and improving use safety.

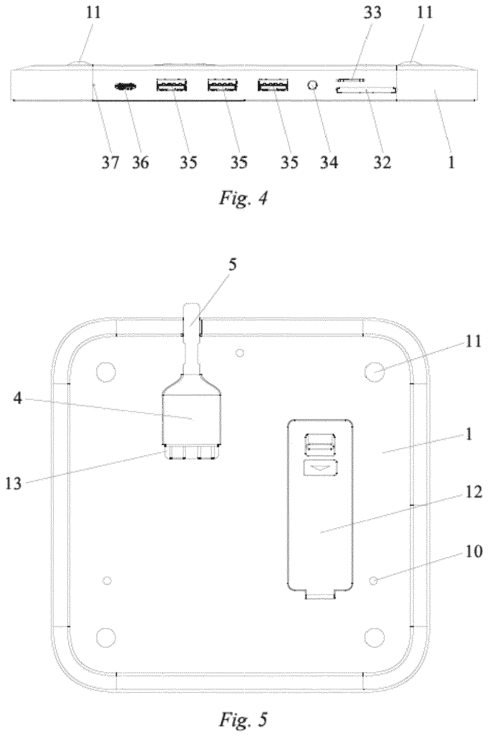

Furthermore, referring to Fig. 5, in a specific embodiment of the adapter provided by the embodiment of the present invention, the base 1 is provided with a clamping slot 13 used for accommodating the adapter head 4. According to the structure, after the conductor 5 is bent, the adapter head 4 can be placed in the clamping slot 13, thus improving structure stability of the adapter.

Optionally, the clamping slot 13 is provided with a magnetic strip (not shown in the figures), and the adapter head 4 is correspondingly provided with a magnetically conductive sheet magnetically connected to the magnetic strip. According to the structure, the adapter head 4 can be magnetically connected to the clamping slot 13, so that the adapter head 4 can be stably disposed in the clamping slot 13. In other embodiments, the adapter head 4 can also be stably disposed in the clamping slot 13 in other manners, which is not uniquely limited herein.

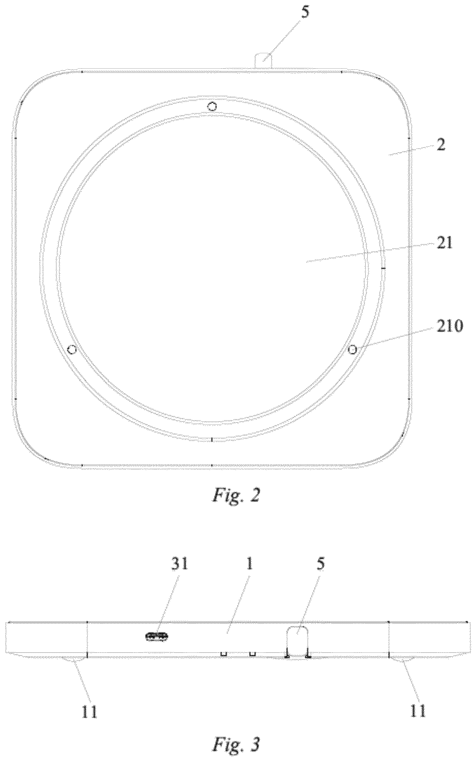

Furthermore, referring to Fig. 3, in a specific embodiment of the adapter having the storage function provided by the embodiment of the present invention, the adapter interface comprises a first port 31 electrically connected to the control panel; and the base 1 is correspondingly provided with a first terminal hole (not illustrated in the figures) used for supporting the first port 31. Specifically, the first terminal hole and the through hole are positioned on the same side of the base 1, and the first port 31 is directly disposed on the control panel. Preferably, the first port 31 is a Type-C interface, which is not uniquely limited herein. According to the structure, one end of the first port 31 is disposed on the control panel and the other end thereof extends into the first terminal hole; the first port 31 is stably mounted; and the first port 31 can be connected to the external electronic device via the first terminal hole.

Furthermore, referring to Fig. 1 and Fig. 4, in a specific embodiment of the adapter having the storage function provided by the embodiment of the present invention, the adapter interface further comprises a second port 32 electrically connected to the control panel; and the base 1 is correspondingly provided with a second terminal hole (not illustrated in the figures) used for supporting the second port 32. Specifically, the second port 32 is directly disposed on the control panel. Preferably, the second port 32 is an SD card (Secure Digital Card) interface used for the SD card to insert, which is not uniquely limited herein. According to the structure, one end of the second port 32 is disposed on the control panel and the other end thereof extends into the second terminal hole; the second port 32 is stably mounted; and the second port 32 can be connected to the external electronic device via the second terminal hole.

Furthermore, referring to Fig. 1 and Fig. 4, in a specific embodiment of the adapter having the storage function provided by the embodiment of the present invention, the adapter interface further comprises a third port 33 electrically connected to the control panel; and the base 1 is correspondingly provided with a third terminal hole (not illustrated in the figures) used for supporting the third port 33. Specifically, the third terminal hole and the second terminal hole are positioned on the same side of the base 1, and the third port 33 is directly disposed on the control panel. Preferably, the third port 33 is a TF card (T-Flash Card, i.e. micro SD card) interface used for a TF card to insert, which is not uniquely limited herein. According to the structure, one end of the third port 33 is disposed on the control panel and the other end thereof extends into the third terminal hole; the third port 33 is stably mounted; and the third port 33 can be connected to the external electronic device via the third terminal hole.

Furthermore, referring to Fig. 1 and Fig. 4, in a specific embodiment of the adapter having the storage function provided by the embodiment of the present invention, the adapter interface further comprises a fourth port 34 electrically connected to the control panel; and the base 1 is correspondingly provided with a fourth terminal hole (not illustrated in the figures) used for supporting the fourth port 34. Specifically, the fourth terminal hole and the second terminal hole are positioned on the same side of the base 1, and the fourth port 34 is directly disposed on the control panel. Preferably, the fourth port 34 is an earphone interface used for accessing an earphone, which is not uniquely limited herein. According to the structure, one end of the fourth port 34 is disposed on the control panel and the other end thereof extends into the fourth terminal hole; the fourth port 34 is stably mounted; and the fourth port 34 can be connected to the external electronic device via the fourth terminal hole.

Furthermore, referring to Fig. 1 and Fig. 4, in a specific embodiment of the adapter having the storage function provided by the embodiment of the present invention, the adapter interface further comprises a fifth port 35 electrically connected to the control panel; and the base 1 is correspondingly provided with a fifth terminal hole (not illustrated in the figures) used for supporting the fifth port 35. Specifically, the fifth terminal hole and the second terminal hole are positioned on the same side of the base 1, and the fifth port 35 is directly disposed on the control panel. Preferably, the fifth port 35 is a USB 3.0 interface, which is not uniquely limited herein. According to the structure, one end of the fifth port 35 is disposed on the control panel and the other end thereof extends into the fifth terminal hole; the fifth port 35 is stably mounted; and the fifth port 35 can be connected to the external electronic device via the fifth terminal hole.

Furthermore, referring to Fig. 1 and Fig. 4, in a specific embodiment of the adapter having the storage function provided by the embodiment of the present invention, the adapter interface further comprises a sixth port 36 electrically connected to the control panel; and the base 1 is correspondingly provided with a sixth terminal hole (not illustrated in the figures) used for supporting the sixth port 36. Specifically, the sixth terminal hole and the second terminal hole are positioned on the same side of the base 1, and the sixth port 36 is directly disposed on the control panel. Preferably, the sixth port 36 is a Type-C interface, which is not uniquely limited herein. According to the structure, one end of the sixth port 36 is disposed on the control panel and the other end thereof extends into the sixth terminal hole; the sixth port 36 is stably mounted; and the sixth port 36 can be connected to the external electronic device via the sixth terminal hole.

The above embodiments are merely preferred embodiments of the present invention but not intended to limit the present invention, and any modifications, equivalent replacements, improvements, etc. made within the spirit and principles of the present invention should be included within the scope of protection of the present invention.

## Claims

1. An adapter having a storage function, **characterized in that**: the adapter comprises a base (1), an upper cover (2) disposed on the base and used for covering the base, a control panel disposed in the base, a memory electrically connected to the control panel, an adapter head (4) electrically connected to the control panel, and several adapter interfaces respectively electrically connected to the control panel, wherein the memory is disposed in the base, an aperture is disposed on the base at a position corresponding to the memory, and the aperture is internally provided with a clamping plate (12) detachably connected to the base, a recess (21) used for supporting an electronic device is disposed on the upper cover protruding towards a bottom face of the base.

2. The adapter having the storage function of claim 1, **characterized in that**: a light hole is disposed on the base (1), an indicator light (37) is disposed in the light hole, and the indicator light is electrically connected to the control panel.

3. The adapter having the storage function of claim 1, **characterized in that**: the base (1) is square; the base has several first rounded corners (14); and the upper cover (2) is provided with several second rounded corners (22) cooperating with the corresponding first rounded corners (14).

4. The adapter having the storage function of claim 1, **characterized in that**: the base (1) is provided with a clamping slot (13) used for accommodating the adapter head (4).

5. The adapter having the storage function of claim 1, **characterized in that**: the adapter interface comprises a first port (31) electrically connected to the control panel; and the base (1) is correspondingly provided with a first terminal hole used for supporting the first port.

6. The adapter having the storage function of claim 5, **characterized in that**: the adapter interface further comprises a second port (32) electrically connected to the control panel; and the base (1) is correspondingly provided with a second terminal hole used for supporting the second port.

7. The adapter having the storage function of claim 6, **characterized in that**: the adapter interface further comprises a third port (33) electrically connected to the control panel; and the base (1) is correspondingly provided with a third terminal hole used for supporting the third port.

8. The adapter having the storage function of claim 7, **characterized in that**: the adapter interface further comprises a fourth port (34) electrically connected to the control panel; and the base (1) is correspondingly provided with a fourth terminal hole used for supporting the fourth port.

9. The adapter having the storage function of claim 8, **characterized in that**: the adapter interface further comprises a fifth port (35) electrically connected to the control panel; and the base (1) is correspondingly provided with a fifth terminal hole used for supporting the fifth port.

10. The adapter having the storage function of claim 9, **characterized in that**: the adapter interface further comprises a sixth port (36) electrically connected to the control panel; and the base (1) is correspondingly provided with a sixth terminal hole used for supporting the sixth port.

11. The adapter having the storage function of any of claims 1 to 10, **characterized in that**: the recess (21) is in the shape of a bowl or a cup.

12. The adapter having the storage function of claim 11, **characterized in that**: the recess (21) can fit with the round protrusion of an electronic device of the type Mac Mini.
